# EUROPÄISCHE PATENTSCHRIFT

(11) **EP 2 196 596 B1**
(45) Veröffentlichungstag und Bekanntmachung des Hinweises auf die Patenterteilung: **13.03.2013**
(21) Anmeldenummer: 10158660.0
(22) Anmeldetag: 04.07.2002
(51) Int. Cl.: E04F 15/02, F16B 5/00

(54) **Befestigungssystem für Paneele**
Fastening system for panels
Système de fixation pour panneaux

(30) Priorität: 10.08.2001 DE 10138285
(43) Veröffentlichungstag der Anmeldung: 16.06.2010
(62) Teilanmeldung aus: 06000431.4
(73) Patentinhaber: Akzenta Paneele + Profile GmbH, 56759 Kaisersesch (DE)
(72) Erfinder: Hannig, Hans-Jürgen, Dr., 51427 Bergisch Gladbach (DE)
(74) Vertreter: Lippert, Stachow & Partner

(56) Entgegenhaltungen:
- WO-A-00/47841
- WO-A-01/02669
- WO-A-01/51732
- WO-A-84/02155
- WO-A-96/27719
- WO-A-98/40583
- WO-A-99/66151
- WO-A1-01/75247
- US-A- 5 274 979

## Beschreibung

Die Erfindung betrifft ein Befestigungssystem für viereckige tafelförmige Paneele mit an den Schmalseiten der Paneele angeordneten Halteprofilen, von denen gegenüberliegend angeordnete Halteprofile derart zueinander passen, dass gleichartige Paneele miteinander verbindbar sind, wobei die Halteprofile an gegenüberliegenden Schmalseiten jedes Paneels als erste Halteprofile und an den übrigen Schmalseiten des Paneels als zweite Halteprofile ausgebildet sind, wobei die ersten Halteprofile so ausgebildet sind, dass an einem in erster Reihe liegenden Paneel in zweiter Reihe ein neues Paneel verriegelbar ist, indem das neue Paneel an seinem ersten Halteprofil zunächst in Schrägstellung relativ zu dem liegenden Paneel an das liegende Paneel angefügt und nachfolgend in die Ebene des liegenden Paneels herabgeschwenkt wird, wobei die gegenüberliegend angeordneten zweiten Halteprofile korrespondierende Hakenelemente aufweisen, und wobei mit einem der Hakenelemente des neuen Paneels und einem Hakenelement eines bereits in zweiter Reihe liegenden Paneels durch das Herabschwenken des neuen Paneels eine Hakenverbindung herstellbar ist, wobei jeder Hakenverbindung ein zusätzliches Sperrelement zugeordnet ist, das im verhakten Zustand zweier Paneele ein Lösen der Hakenverbindung in einer Richtung senkrecht zu der Ebene der verlegten Paneele unterbindet, mit der Maßgabe, dass jedes der Hakenelemente der gegenüberliegenden Schmalseiten eines Paneels eine Sperrnut aufweist, die sich in Längsrichtung der Schmalseite erstreckt, wobei die Sperrnuten an solchen Flächen eines Hakenelements vorgesehen sind, die im verlegten Zustand der Paneele etwa senkrecht zu der Ebene ausgerichtet ist, in der die Paneele verlegt sind, wobei die Sperrnuten zweier Paneele im verbunden Zustand der Hakenelemente aneinander grenzen und eine gemeinsame Sperrausnehmung bilden, wobei das Sperrelement im verhakten Zustand zweier Paneele in der Sperrausnehmung angeordnet ist und teilweise in den Querschnitt der Sperrnut des einen Paneels und teilweise in den Querschnitt der Sperrnut des anderen Paneels ragt, insbesondere für Fußbodenpaneele.

Ein Befestigungssystem ist aus der DE 199 29 896 A1 bekannt sowie aus der zur selben Patentfamilie gehörenden WO 01/02669 A1. Charakteristisch ist für ein solches Befestigungssystem, dass die verwendeten ersten und zweiten Halteprofile stark unterschiedliche Geometrien aufweisen und sich dadurch auch die Fügeweisen der verschiedenartigen Halteprofile sehr unterscheiden. Insbesondere die als Hakenelemente ausgebildeten zweiten Halteprofile, die zu einer Hakenverbindung zusammengefügt werden, bergen ein technisches Problem. Zwar sichert die bekannte Hakenverbindung Fußbodenpaneele gut gegen ebenes Auseinanderschieben rechtwinklig zu den Schmalseiten der verbundenen Paneele. Allerdings bietet sie keine befriedigende Festigkeit gegen ein Lösen der Hakenelemente in einer Richtung senkrecht zu der Verlegeebene der Paneele.

Aus der WO 01/75247 A1 ist ein Befestigungssystem bekannt, das eine Hakenverbindung vorschlägt, die mit Hakenelementen hergestellt wird. Die bekannte Hakenverbindung soll eine vertikale Bewegung zwischen zwei verbundenen benachbarten Paneelen durchaus zulassen, sie jedoch mittels eines Schnapphakens begrenzen, der mit einer Hinterschneidung zusammenwirkt. An der Begrenzung der vertikalen Bewegung kann ein separates Federteil beteiligt sein, das den Schnapphaken ersetzt und dessen Funktion übernimmt. Die WO 01/75247 A1 bildet nachveröffentlichten Stand der Technik gemäß Artikel 54(3) des Europäischen Patentübereinkommens und ist daher für die Beurteilung der erfinderischen Tätigkeit ohne Bedeutung.

Weitere Beispiele für Befestigungssysteme für Paneele sind aus der WO 01/51732 A1 bekannt. Diese schlägt mit dem Ausführungsbeispiel gemäß Fig. 7 ein gattungsgemäßes Befestigungssystem für Paneele mit Hakenelementen vor. Dabei ist für die Verriegelungswirkung in einer Richtung senkrecht zur Verlegeebene der Paneele ein separates Sperrelement vorgesehen, das als "Fremdfeder" bezeichnet ist. Die mit der Fremdfeder zu verriegelnden Hakenelemente der Paneele werden durch eine scherenartige Bewegung zueinander verbunden, die durch Herabschwenken des einen Paneels erzielt wird (Herabschwenktechnik). Nachträglich wird dann das separate Sperrelement in die Hakenverbindung eingeschoben werden.

Bevorzugt angewendet wird ein derartiges Befestigungssystem für sogenannten Laminatfußboden, der einen Kern aus Holzwerkstoff, wie MDF, HDF oder Spanplattenmaterial aufweist. Die mechanischen Halteprofile sind zumeist an die Schmalseiten von Holzwerkstoffplatten angefräst.

Laminatfußboden wird überwiegend schwimmend verlegt. Zur Minderung von Trittschall wird üblicherweise eine trittschalldämmende Zwischenlage zwischen dem Verlegeuntergrund und den Laminatpaneelen angeordnet. Auch bekannt ist es, dass eine trittschalldämmende Schicht an der dem Verlegeuntergrund zugewandten Unterseite von Laminatpaneelen fest angebracht ist.

Besonders problematisch ist die Hakenverbindung des bekannten Befestigungssystem dann, wenn im Bereich einer Hakenverbindung nur dasjenige Paneel mit einer großen Last beaufschlagt ist, dessen Hakenelement unten liegt, nämlich dem Verlegeuntergrund zugewandt ist. Das mit diesem verhakte obenliegende Hakenelement des benachbarten Paneels ist nicht belastet daher wird durch die Last nur das Paneel mit dem untenliegenden Hakenelement in die zumeist weiche trittschalldämmende Zwischenlage gedrückt. Dabei löst sich das obenliegende Hakenelement des unbelasteten Paneels aus dem untenliegenden Hakenelement des benachbarten Paneels. Die Hakenverbindung ist außer Funktion und die Funktion meist nicht wieder herstellbar.

Nach dem Stand der Technik sind Hinterschneidungen in die Hakenverbindung integriert, durch die ein Lösen der Hakenverbindung senkrecht zur Verlegeebene der Paneele verhindert werden soll. Diese Hinterschneidungen haben sich jedoch als unzureichend erwiesen, dieser Art von Befestigungselementen eine ausreichende Festigkeit zu verleihen.

Der Erfindung liegt die Aufgabe zugrunde, unter Beibehaltung der Herabschwenktechnik zum Verbinden der Paneele, die von dem bekannten Befestigungssystem gemäß WO 01/51732 A1, Fig. 7 bekannt ist, dessen Einsatzmöglichkeiten zu erweitern.

Erfindungsgemäß wird die Aufgabe durch ein Befestigungssystem wie im Anspruch 1 definiert gelöst, wobei das einrastbare Sperrelement so ausgebildet ist, dass es seitlich in die Sperrnut eines der zu verbindenden Hakenelemente des neuen Paneels und des bereits in zweiter Reihe, liegenden Paneels angefügt ist, bevor das neue Paneel in zweiter Reihe herabgeschwenkt wird, wobei die Einrastung des Sperrelements selbsttätig dann geschieht, wenn das neue Paneel herabgeschwenkt wird, wobei die Hakenverbindung durch erfolgte Einrastung des Sperrelements senkrecht zu der Ebene der verlegten Paneele verriegelt ist, und dass das Sperrelement so ausgebildet ist, dass eine federnde Rastlasche vorgesehen ist, die im entspannten Zustand von der Schmalseite weit hervorsteht, so dass er während des Herabschwenkens des ersten Paneels in die Ebene der verlegten Paneele mit dem Hakenelement des zweiten Paneels in Berührung kommt und automatisch soweit zurückklappbar ist, dass die federnde Rastlasche an der Schmalseite nicht mehr über das äußere Ende des Hakenelements des ersten Paneels hinausragt.

Beider Profilierung der Hakenelemente mit Fräswerkzeugen lassen sich die Sperrnuten sehr einfach mitfräsen. Hierzu müssen entsprechende Konturen an den Fräswerkzeugen vorgesehen sein.

Es ist bei der Erfindung sehr nützlich, dass das Sperrelement im verhakten Zustand zweier Paneele einfach in die Sperrausnehmung einfügbar ist und der Querschnitt zumindest teilweise in den Querschnitt der Sperrnut des einen Paneels und teilweise in den Querschnitt der Sperrnut des anderen Paneels ragt. Die Querschnittsaufteilung zwischen den Sperrnuten ist nahezu beliebig. Sie kann beispielsweise davon abhängig gemacht werden, ob eines der Hakenelemente, in dem sich die Sperrnut befindet, stabiler ausgebildet ist als das andere. Das Einfügen des Sperrelements in die Sperrausnehmung kann durch Einschieben oder Einschlagen erfolgen. Es ist möglich, die Toleranzen des Sperrelements und der Sperrausnehmung so auszulegen, dass das Sperrelement sich leicht oder straff in die Sperrausnehmung einfügen lässt.

Bei der Erfindung ist das Sperrelement in einer Sperrnut eines der Hakenelemente eines ersten Paneels angeordnet und weist eine federnde Rastlasche auf. Dabei bildet eine Sperrnut des zugeordneten Hakenelements der gegenüberliegenden Schmalseite eines zweiten Paneels eine hinterschnittene Rastvertiefung, in der die Rastlasche des Hakenelements des ersten Paneels während der Montage selbsttätig einrastbar ist.

Diese Konstruktion ist mit einem Sperrelement versehen, das eine im entspannten Zustand von der Schmalseite weit hervorstehende Rastlasche aufweist, die während des Herabschwenkens eines neuen Paneels in die Ebene der verlegten Paneele mit dem Hakenelement des benachbarten Paneels in Berührung kommt und automatisch soweit zurückgeklappt wird, dass die Rastlasche an der Schmalseite nicht mehr über das äußere Ende des Hakenelements hinausragt. Wenn die Hakenverbindung nahezu ihre Verriegelungsposition erreicht hat, federt die Rastlasche selbsttätig in die Rastvertiefung des Hakenelements des benachbarten Paneels hervor und verriegelt die Hakenverbindung in vertikaler Richtung, nämlich senkrecht zur Ebene der verlegten Paneele.

Ein derartig selbsttätiges Rastelement kann in einem der Hakenelemente vormontiert sein oder lose beiliegen, damit es der Verleger selbst während der Verlegung der Paneele an dem dafür vorgesehenen Hakenelement anbringen kann.

Das selbsttätige Sperrelement sowie die Rastvertiefung sind zweckmäßigerweise so ausgebildet, dass das Sperrelement jederzeit mit einem einfachen Werkzeug, beispielsweise einer spitzen Zange leicht in Längsrichtung der Schmalseiten aus der Hakenverbindung herausgezogen werden kann, wenn die Paneele demontiert werden müssen. Dazu ist zu beiden Seiten der Rastlasche ein freier Zwischenraum vorgesehen, damit eine Zange angesetzt werden kann.

Der prinzipielle Vorteil der Verriegelung mittels eines einrastenden Sperrelements gegenüber einem einzuschiebenden Sperrelement ist, dass vor der Schmalseite einer Paneelreihe kein Raum benötigt wird, um das Sperrelement an eine Sperrausnehmung anzusetzen und in diese einzuschieben. Ein einzuschiebendes Sperrelement lässt sich nahe einer Wand nicht mehr in eine Sperrausnehmung einfügen, wohingegen das einrastbare Sperrelement problemlos seitlich an eines der Hakenelemente angefügt und durch Herabschwenken eines neuen Paneels verriegelt werden kann.

Ein Paneel mit einem erfindungsgemäßen Befestigungssystem weist zwei unterschiedliche Arten miteinander zusammenwirkender Halteprofile auf. Diejenigen Halteprofile, über die die einzelnen Verlegereihen eines Fußbodens miteinander verriegelt sind, weisen Halteprofile auf, die nach dem Prinzip: Schräges Ansetzen eines neuen Paneels und anschließendes Herabschwenken desselben verriegelt werden. Die hierfür benötigte Art Halteprofil ermöglicht es, ein neues Paneel durch eine scharnierartige Schwenkbewegung an einer verlegten Paneelreihe mechanisch zu verriegeln. Die einzelnen Paneelreihen sind dadurch gegen ebenes Auseinanderziehen in einer Richtung senkrecht zu den verriegelten Halteprofilen gesichert.

An den übrigen beiden Schmalseiten eines Paneels sind Halteprofile in Form von Hakenelementen angebracht, wobei ein erstes Hakenelement von der Schmalseite hervorsteht und im verlegten Zustand dem Verlegeuntergrund zugewandt ist und das zweite Hakenelement von der Schmalseite hervorsteht und der dekorativen Oberseite des Paneels zugewandt ist. Beide Hakenelemente einer Hakenverbindung sind durch ein zusätzliches Sperrelement gegen ein Auseinanderbewegen senkrecht zur Ebene der verlegten Paneele gesichert.

Nachstehend ist die Erfindung in einer Zeichnung beispielhaft dargestellt und anhand der Figuren detailliert beschrieben.

Es zeigen:
- Fig. 1: eine perspektivische Darstellung eines Halteprofils, das durch schräges Ansetzen eines neuen Paneels und anschließendes Herabsenken in die Verlegeebene mechanisch zu verriegeln ist,
- Fig. 2: das schräge Ansetzen der Halteprofile gemäß Figur 1,
- Fig. 3: die Halteprofile gemäß Figur 1 im verriegelten Zustand,
- Fig. 4: Halteprofile in Form von Hakenelementen gemäß dem Stand der Technik,
- Fig. 5-10: Ausführungsformen einer Hakenverbindung mit einem oder mehreren zusätzlichen Sperrelementen mit rechteckigem Querschnitt,
- Fig. 11-14: eine Konstruktion einer Hakenverbindung mit einem oder mehreren zusätzlichen Sperrelementen, die einen runden Querschnitt aufweisen,
- Fig. 15/16: Ausführungsformen einer Hakenverbindung mit Sperrelementen, die im verlegten Zustand der Paneele in solche Flächen der Hakenelemente eingelassen sind, die etwa horizontal liegen,
- Fig. 17-20: eine Ausführungsform einer Hakenverbindung mit einem Sperrelement mit einer federnden Rastlasche, die während der Montage der Hakenverbindung selbsttätig in eine zugeordnete Rastvertiefung eingreift
- Fig. 21: eine Hakenverbindung mit einem als Krallstück ausgebildeten Sperrelement,
- Fig. 22: eine Hakenverbindung mit einem als Klammer ausgebildeten Sperrelement an der Unterseite der Paneele,
- Fig. 23: ein weiteres Sperrelement mit einer federnden Rastlasche sowie eine Sperrnut, die zur Aufnahme des Sperrelements angepasst ist,
- Fig. 24: eine Hakenverbindung mit dem Sperrelement gemäß Fig. 23, während des Fügevorgangs,
- Fig. 25: eine Hakenverbindung mit dem Sperrelement gemäß Fig. 23 im eingerasteten Zustand,
- Fig. 26: eine Hakenverbindung mit denselben Sperrnuten und derselben Sperrausnehmung, wie gemäß Fig. 25, wobei das Rastlaschen-Sperrelement ersetzt ist durch ein Sperrelement mit rundem Querschnitt.

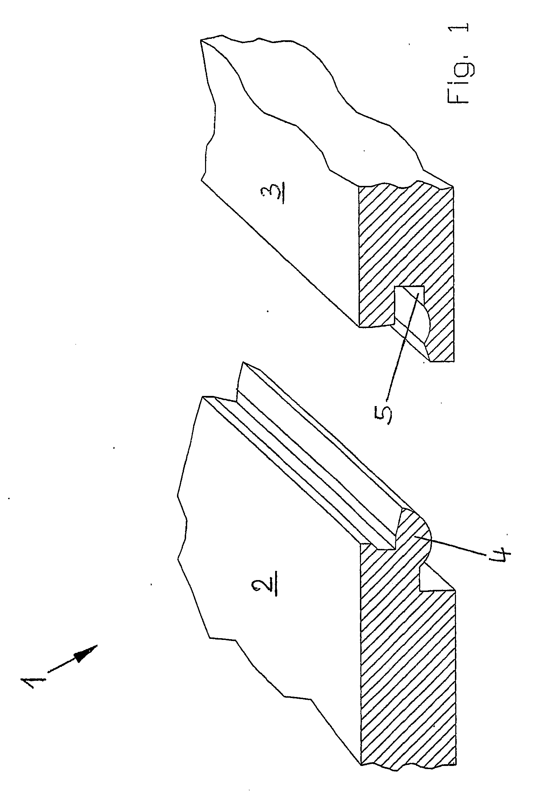

Die Figuren 1 bis 14, 15, 16, 21 und 22 sind keine Ausführungsbeispiele der Erfindung, sondern Beispiele, die dazu dienen, die Vorteile der Erfindung zu verstehen.

Nach Figur 1 der Zeichnung ist eine Art der Halteprofile des erfindungsgemäßen Befestigungssystems 1 perspektivisch dargestellt. An der jeweils gegenüberliegenden Schmalseite von Paneelen 2 und 3 sind korrespondierende Halteprofile vorgesehen, so dass sich die benachbarten Paneele 2 und 3 miteinander verbinden lassen. Bei dieser Art der Halteprofile handelt es sich um eine modifizierte Nut- und Federverbindung, bei der die Feder 4 eine Hinterschneidung in der unteren Nutwand der Nut 5 hintergreift, so dass beide Paneele 2 und 3 im verlegten Zustand gegen ein Auseinanderziehen in der Ebene der verlegten Paneele 2 und 3 und senkrecht zur Richtung der verriegelten Schmalseiten gesichert sind.

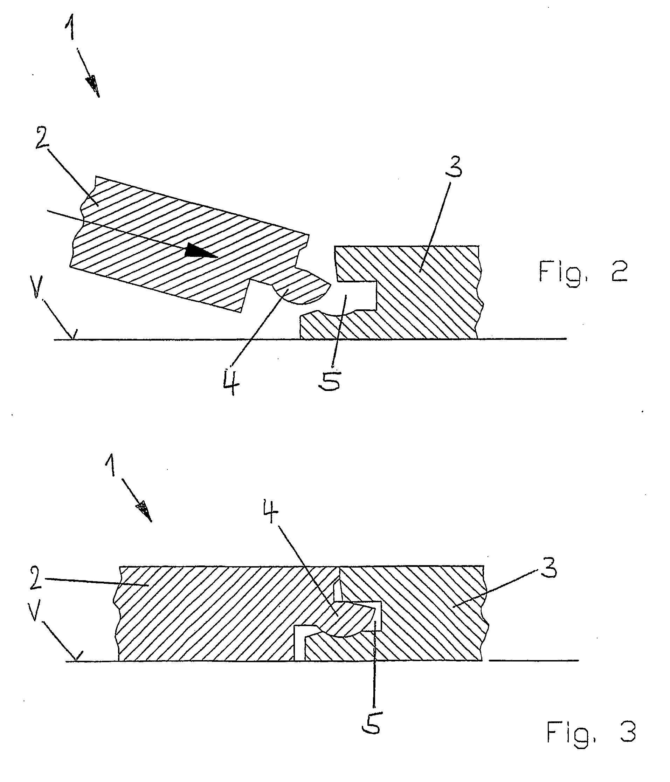

Figur 2 zeigt das schräge Ansetzen eines neuen Paneels 2. Dabei wird stets die Feder 4 des neuen Paneels 2 in Pfeilrichtung P1 mit der Nut 5 des verlegten Paneels 3 in Eingriff gebracht und das neue Paneel 2 anschließend auf den Verlegeuntergrund V herabgeschwenkt, bis die in Figur 3 dargestellte Lage erreicht ist. Es ist leicht verständlich, dass ein gekrümmter Bereich 4a des Querschnitts der Feder 4 eine im Querschnitt gekrümmte Vertiefung 5a in der unteren Nutwand 5b der Nut 5 derart hintergreift, dass ein ebenes Auseinanderschieben der Paneele 2 und 3 senkrecht zu den verriegelten Schmalseiten verhindert ist.

An den übrigen Schmalseiten eines Paneels 2 bzw. 3, das mit dem erfindungsgemäßen Befestigungssystem 1 ausgestattet ist, sind korrespondierende Halteprofile mit Hakenelementen 6 und 7 vorgesehen. Diese haben den Vorteil, dass sie sich sozusagen gleichzeitig mit der Verriegelung der gemäß Figuren 1-3 beschriebenen Halteprofile, Feder 4 und Nut 5, nach dem schrägen Ansetzen durch ein Herabschwenken des neuen Paneels 2 auf den Verlegeuntergrund V miteinander verhaken. Eine irgendwie geartete seitliche Fügebewegung ist zur Herstellung der sich ergebenden Hakenverbindung 8 nicht erforderlich.

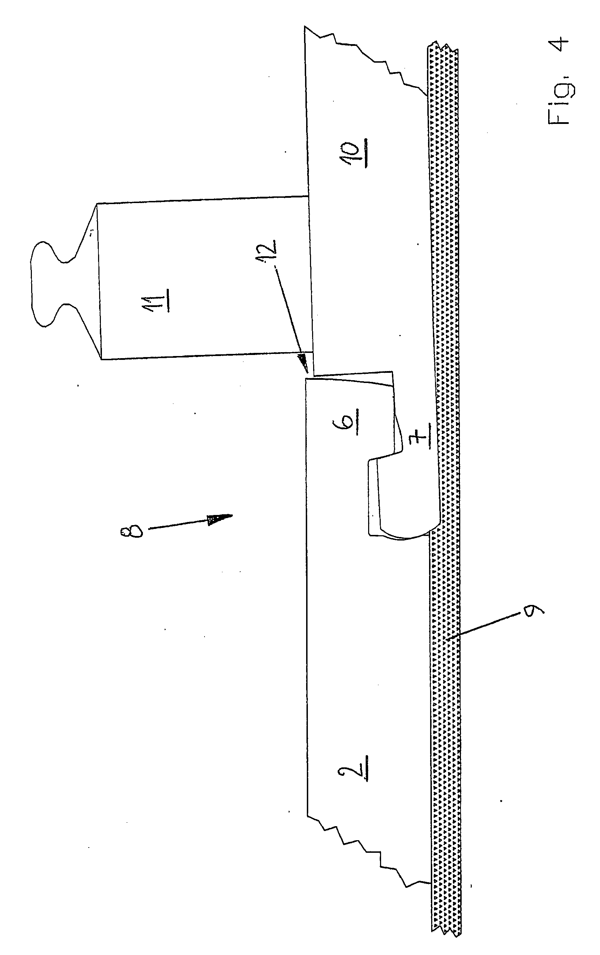

Die gemäß Figur 4 dargestellte Hakenverbindung 8 gerät außer Eingriff. Dies beispielsweise auf unebenen Untergründen, mit Luft zwischen den Paneelen und dem Verlegeuntergrund V sowie dann, wenn eine weiche trittschalldämmende Zwischenlage 9 zwischen den Paneelen und Verlegeuntergrund V angeordnet ist. In Figur 4 verdeutlicht das symbolisch dargestellte Gewicht 11, wie ein Paneel, dessen Hakenelement dem Verlegeuntergrund zugewandt ist, unter der Last eines Gewichts 11 in eine weiche trittschalldämmende Zwischenlage 9 einsinkt. Hierbei kommt es zu einem Höhenversatz 12 an der Oberfläche der Paneele 2 und 10.

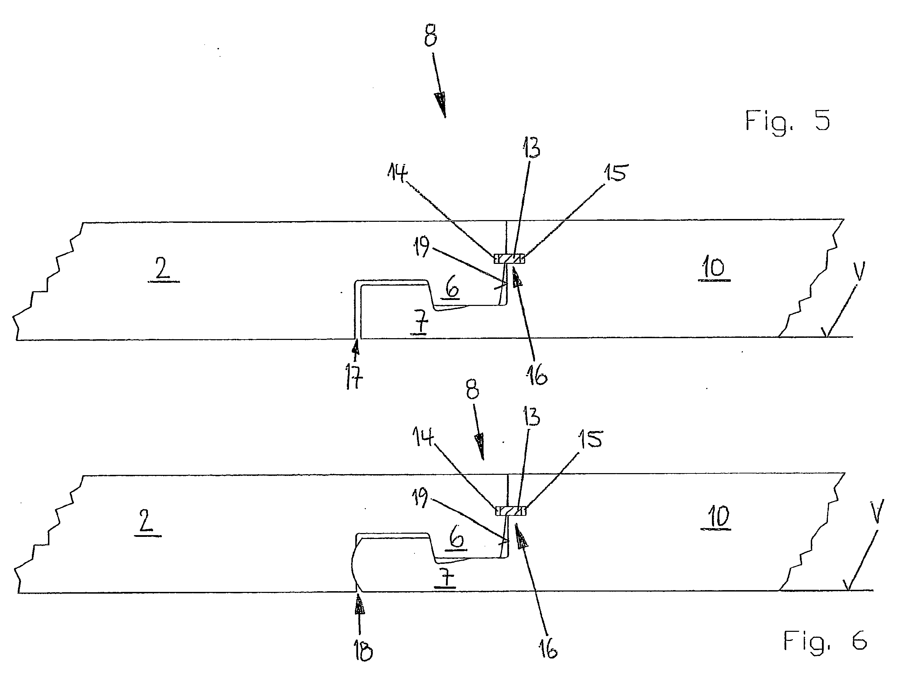

Die Figuren 5-10 stellen unterschiedliche Ausführungsformen von Hakenverbindungen 8 dar, die alle mit einem zusätzlichen Sperrelement 13 verriegelt sind. Das Sperrelement 13 verhindert ein Auseinanderbewegen der Hakenverbindung 8 in einer Richtung senkrecht zur Ebene der verlegten Paneele 2 und 10. Auch bei einer Belastung gemäß Figur 4 verhindert das zusätzliche Sperrelement 13 einen Höhenversatz der verhakten Paneele 2 und 10. Das Sperrelement 13 weist in den Ausführungsformen der Figuren 5-10 einen rechteckigen Querschnitt auf. Zur Aufnahme des Sperrelements 13 sind Sperrnuten 14 und 15 vorgesehen, die sich im verhakten Zustand der Hakenelemente 6 und 7 exakt so gegenüberliegen, dass sich eine gemeinsame Sperrausnehmung 16 ergibt, in die das Sperrelement 13 in einer Richtung senkrecht zur der dargestellten Zeichnungsebene eingefügt wird. Die Ausführungsform gemäß Figur 5 zeigt einen freien Zwischenraum 17 zwischen dem freien Ende des Hakenelements 7, das dem Verlegeuntergrund V zugewandt ist, und der Schmalseite des zugeordneten Paneels 2.

In Figur 6 hingegen ist an der gleichen Stelle kein Spiel vorgesehen. Stattdessen ist auch hier eine hinterschnittene Verbindung 18 vorgesehen, die ebenfalls in einer Richtung senkrecht zur der Ebene der verlegten Paneele 2 und 10 verriegelt. An dem Paneel 2, dessen Hakenelement 6 der Oberfläche zugewandt ist, weist das Hakenelement 6 an einer frei hervorstehenden Fläche der Schmalseite die Sperrnut 14 auf, wohingegen die Sperrnut 15 des gegenüberliegenden Hakenelements 7 der Hakenverbindung 8 an einer zurückstehenden Fläche 19 des Hakenelements 7 vorgesehen ist. Das gleiche gilt für die Ausführungsform gemäß Figur 6.

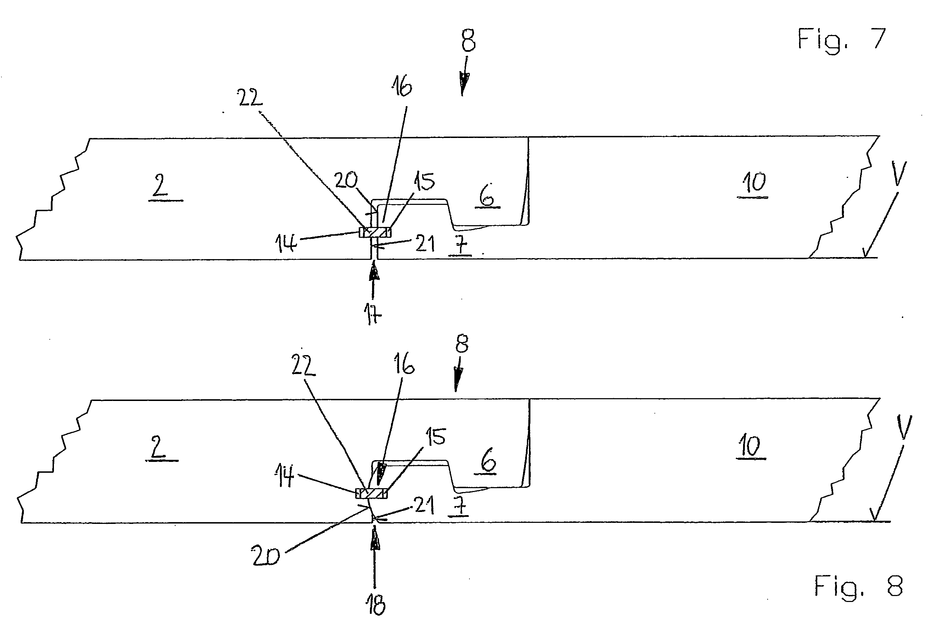

Die Figuren 7 und 8 zeigen Beispiele einer Hakenverbindung 8, bei denen das ein zusätzliches Sperrelement 22 auf der Schmalseite an der frei hervorstehenden Fläche 20 eines Hakenelements 7 vorgesehen ist, das dem Verlegeuntergrund V zugewandt ist. An dem korrespondierenden Hakenelement 6 ist die Sperrnut 15 demgemäß an einer zurückstehenden Fläche 21 des Hakenelements 6 an der Schmalseite des Paneels 2 angeordnet. Figur 7 zeigt ein Beispiel, bei dem die Hakenelemente 6 und 7 im Bereich des Sperrelements 22 einen freien Zwischenraum 17 aufweisen. Gemäß Figur 8 hingegen ist im Bereich des Sperrelements 22 kein freier Zwischenraum 17 zwischen den Hakenelementen 6 und 7 vorgesehen. Stattdessen erhöht eine hinterschnittene Verbindung 18 die Festigkeit der Hakenverbindung 8 gegen ein Auseinanderschieben in einer Richtung senkrecht zu der Ebene der verlegten Paneele 2und 10.

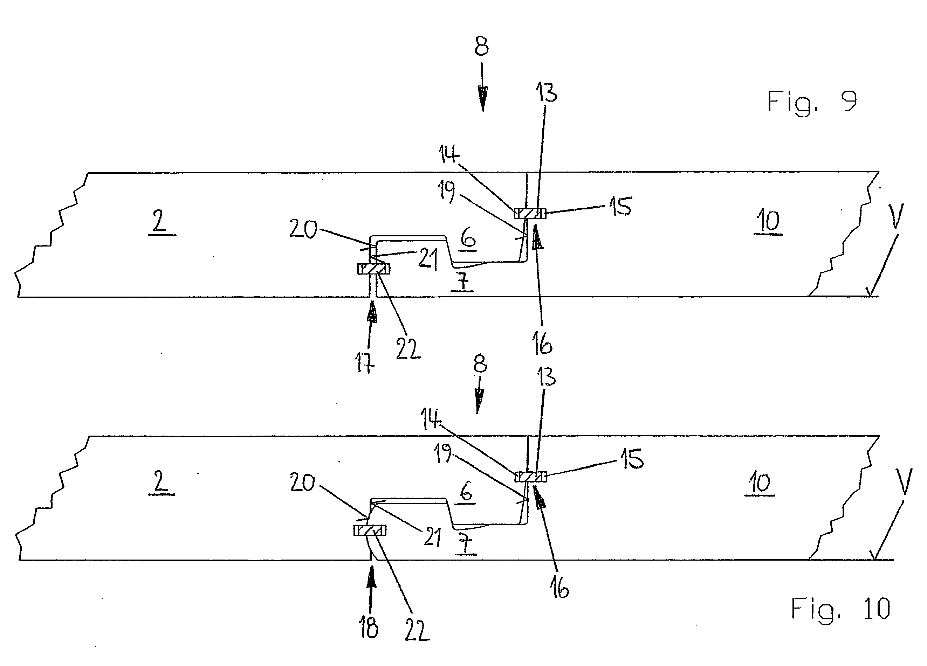

Gemäß Figuren 9 und 10 sind Konstruktionen dargestellt, in denen jede Hakenverbindung 8 mit zwei Sperrelementen 13 und 22 ausgestattet ist. Gemäß Figur 9 sind die Positionen der Sperrelemente 13 und 22 aus Figur 5 und Figur 7 zusammengenommen. In Figur 10 sind die Positionen der Sperrelemente 13 und 22 gemäß Figuren 6 und 8 zusammengenommen. Figur 9 ist ein weiteres Beispiel für eine Hakenverbindung 8, bei der das dem Verlegeuntergrund V zugewandte Hakenelement 7 an seinem freien Ende einen Zwischenraum 17 zu der Schmalseite des Hakenelements 6 des benachbarten Paneels 2 aufweist, wohingegen Figur 10 an der gleichen Stelle eine hinterschnittene Verbindung 18 vorsieht.

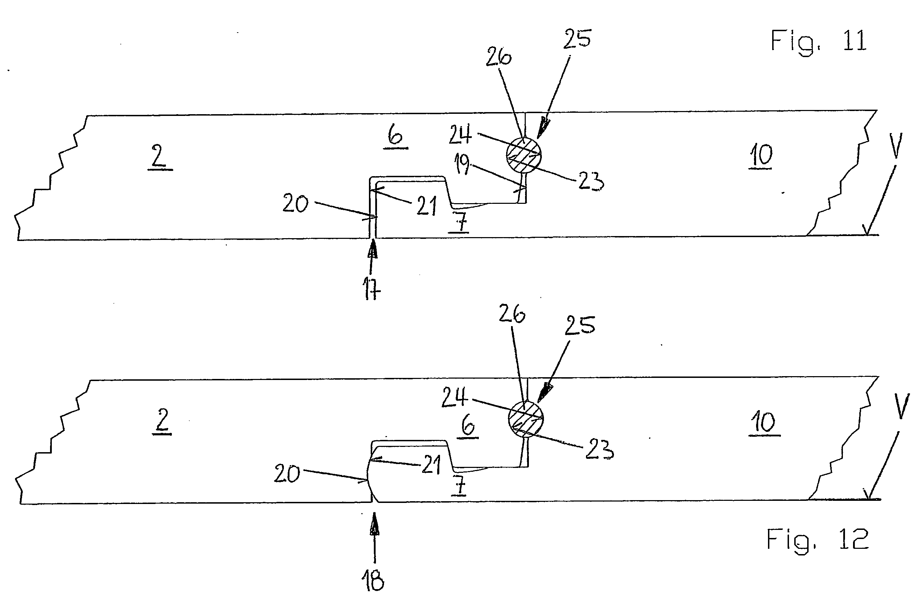

Gemäß Figuren 11-14 sind Sperrelemente mit rundem Querschnitt vorgesehen. Gemäß Figur 11 ist eine Sperrnut mit halbkreisförmigem Querschnitt an dem äußeren freien Ende des Hakenelements 6 angeformt, das der Oberseite des Paneels 2 zugewandt ist. An dem korrespondierenden Hakenelement 7 ist eine Sperrnut 24 demgemäß an einer zurückstehenden Fläche 19 des Hakenelements 7 angebracht, so dass die beiden Sperrnuten 23 und 24 gemeinsam eine Sperrausnehmung 25 mit kreisförmigem Querschnitt ergeben, in der ein Sperrelement 26 angeordnet ist. Das Gleiche gilt für die Ausführungsform gemäß Figur 12. In Figur 11 ist zwischen dem dem Verlegeuntergrund V zugewandten Hakenelement 7 des einen Paneels 10 und einer zurückstehenden Fläche 21 des Hakenelements 6 an der Schmalseite des benachbarten Paneels 2 ein freier Zwischenraum 17 vorgesehen, wohingegen gemäß Figur 12 an der gleichen Stelle eine hinterschnittene Verbindung 18 integriert ist.

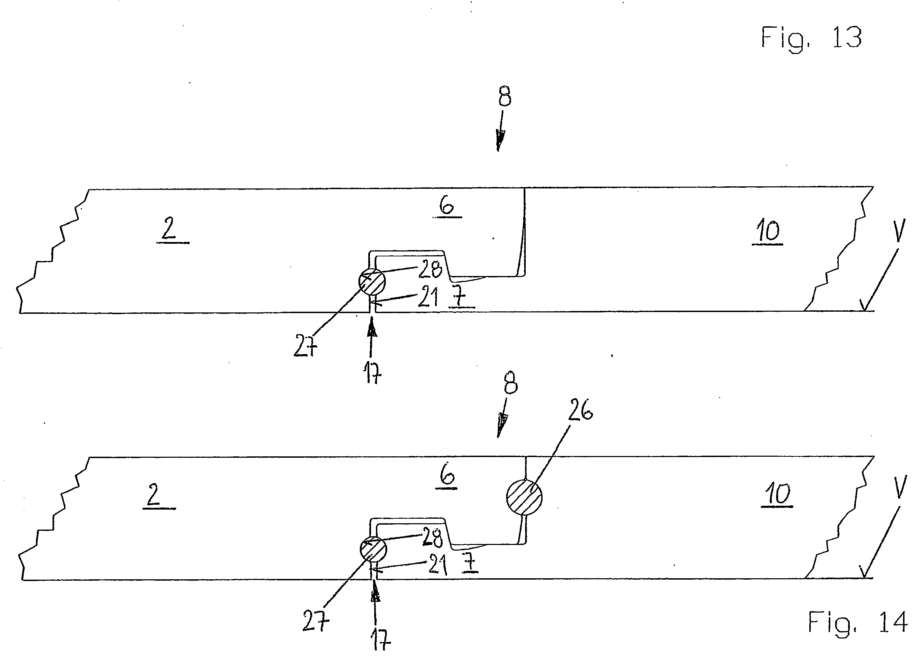

Im Unterschied zu Fig. 12 ist gemäß Figur 13 der Ort für ein kreisrundes Sperrelement 27 an das freie Ende eines Hakenelements 7 eines Paneels 10 verlagert. Eine Sperrnut 28 des korrespondierenden Hakenelements 6 ist dementsprechend an einer an der Schmalseite zurückstehenden Fläche 21 des benachbarten Paneels 2 vorgesehen. Figur 13 ist ein Beispiel dafür, dass das Sperrelement 27 an einem Ort vorgesehen sein kann, bei dem ein freier Zwischenraum 17 zwischen dem äußeren freien Ende des unteren Hakenelements 7 und der gegenüberliegenden Fläche 21 des korrespondierenden Hakenelements 6 vorgesehen ist. Eine Ausführungsform ohne Freiraum 17, mit flach aneinander liegenden ebenen Flächen sowie eine Ausführungsform mit einer hinterschnittenen Verbindung 18 gemäß dem unteren Hakenelement 7 der Figur 12 kann ebenfalls mit einer Sperrausnehmung und einem Sperrelement 27 ausgestattet werden.

Gemäß Figur 14 ist eine besonders feste Hakenverbindung 8 dargestellt, bei der zwei Sperrelemente 26 und 27 mit kreisförmigem Querschnitt zum Einsatz kommen. Die Orte der Sperrelemente 26 und 27 sind zusammengenommen aus den Ausführungsformen gemäß Figur 11 und Figur 13.

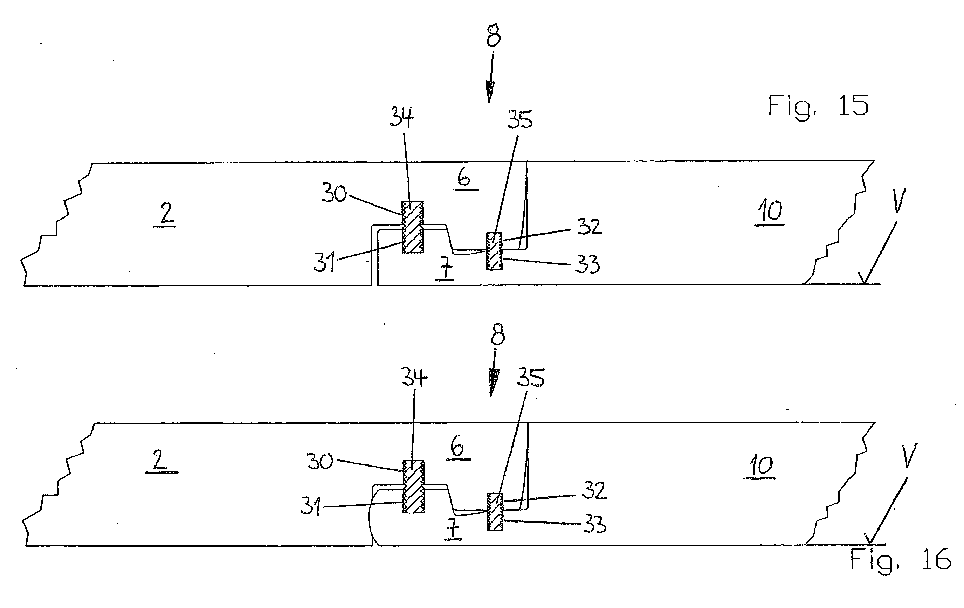

In Figur 15 und 16 ist der verlegte Zustand von Paneelen 2 und 10 mit einer fertigen Hakenverbindung 8 dargestellt. Dabei sind Sperrnuten 30, 31, 32 und 33 in Flächen vorgesehen sind, die etwa parallel zur Ebene der verlegten Paneele liegen. Wiederum sind die Sperrnuten 30 und 32 des einen Hakenelements 6 sowie die Sperrnuten 31 und 33 des korrespondierenden Hakenelements 7 so angeordnet, dass sie sich exakt gegenüberliegen und gemeinsam je eine Sperrausnehmung bilden, in der ein Sperrelement 34 bzw. 35 angeordnet ist. Sowohl gemäß Figur 15 als auch gemäß Figur 16 ist es möglich, auf eines der Sperrelemente 34 bzw. 35 und die entsprechende Sperrausnehmung zu verzichten, um die Geometrie zu vereinfachen. Da die Sperrelemente 34 und 35 ein Auseinanderbewegen der Hakenverbindungen 8 in einer Richtung senkrecht zu der Ebene der Paneele 2 und 10 verhindern müssen, sind die Sperrelemente 34 und 35 so ausgelegt, dass sie sich seitlich in die Nutwände der Sperrnuten30, 31, 32 und 33 festsetzen. In den dargestellten Ausführungsbeispielen sind zu diesem Zweck an der Oberfläche der Sperrelemente hervorstehende Krallelemente 34a und 35a vorgesehen. Diese können auch nach Art von Widerhaken ausgebildet sein, wobei die Widerhaken in der einen Sperrnut 30 und die Widerhaken in der gegenüberliegenden Sperrnut 31 derselben Sperrausnehmung entgegengerichtet angeordnet sind. Das gleiche gilt für die Widerhaken in den Sperrnuten 32 und 33.

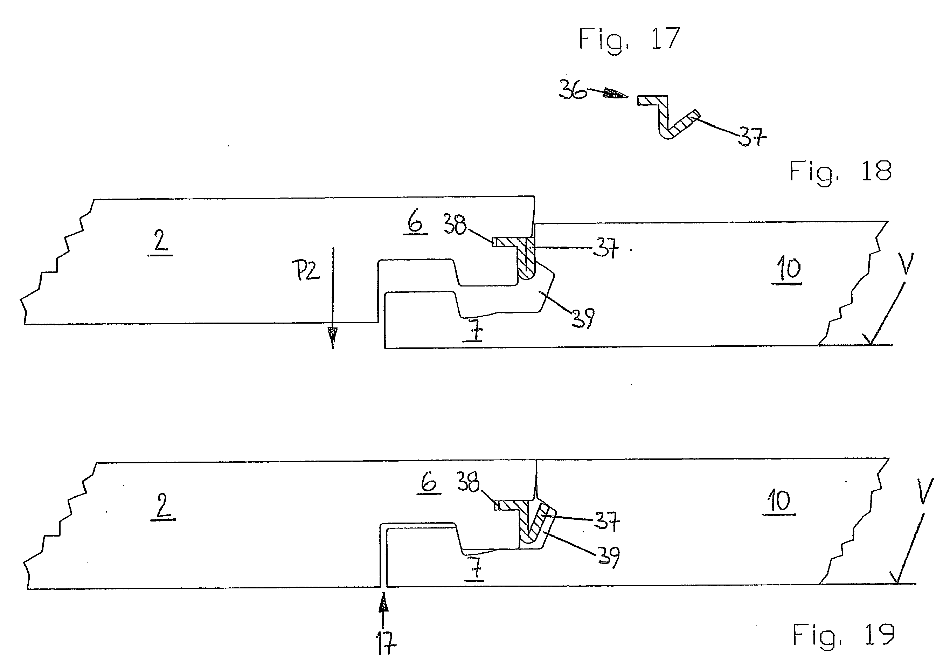

Eine weitere Ausführungsform einer Hakenverbindung 8 ist in den Figuren 17 - 20 dargestellt. Figur 17 zeigt ein loses Sperrelement 36 mit einer federnden Rastlasche 37, die im dargestellten entspannten Zustand weit abgespreizt ist. Figur 18 zeigt das allmähliche Ineinanderfügen der Hakenverbindung 8 gemäß Pfeilrichtung P2. Dabei ist das Sperrelement 36 gemäß Figur 17 in einer Nut 38 in der frei hervorstehenden Fläche 38a des oberen Hakenelements 6 eingesetzt. Die federnde Rastlasche 37 ist durch die Fügebewegung selbst zurückgeklappt. Sobald die Hakenverbindung 8 die in Figur 19 dargestellte Verriegelungslage nahezu erreicht, federt die Rastlasche 37 des Sperrelements 36 selbsttätig in eine Rastvertiefung 39 des korrespondierenden Hakenelements 7. In der gezeigten Stellung ist die Rastlasche 37 weniger weit abgespreizt als in ihrer nach Fig. 17 gezeigten entspannten Lage, so dass sie permanent einen Federdruck gegen die Rastvertiefung 39 ausübt und die Hakenverbindung 8 sicher arretiert.

Das Sperrelement 36 kann durch einen Verlegehandwerker als loses Element in der dafür vorgesehenen Nut 38 des oberen Hakenelements 6 eingesetzt werden oder herstellerseitig an dem Hakenelement 6 vormontiert sein. Das Sperrelement 36 kann sich über die gesamte Länge der Schmalseite eines Paneels erstrecken oder nur über einen Teil der Länge der Schmalseite. In dem Ausführungsbeispiel erstreckt es sich von einem Ende der Schmalseite über deren halbe Länge.

In Figur 19 ist dargestellt, dass zu beiden Seiten der Rastlasche 37 Freiräume vorhanden sind. Diese können beispielsweise dazu dienen, zwecks Demontage der Paneele 2 und 10 das Sperrelement 36 mit Hilfe einer Spitzzange aus der Hakenverbindung 8 herauszuziehen und diese dadurch zu entriegeln.

Die Figuren 18 und 19 zeigen wiederum eine Konstruktion, bei der das dem Verlegeuntergrund V zugewandte Hakenelement 7 an seinem äußeren Ende einen freien Zwischenraum 17 zu dem korrespondierenden Hakenelement 6 aufweist.

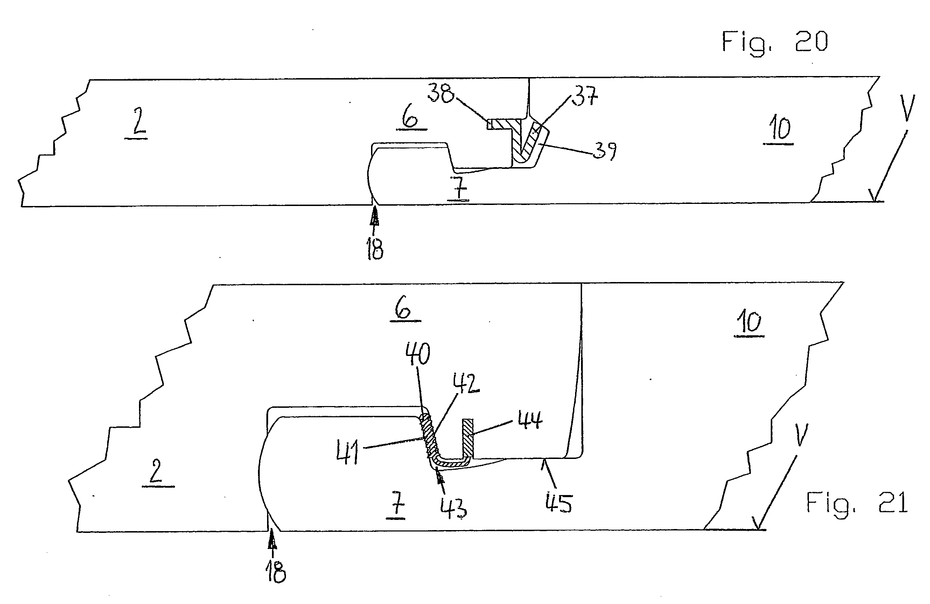

Eine weitere Ausführungsform der Hakenverbindung mit einem Sperrelement, 36 das eine selbsttätige Rastlasche 37 aufweist, ist in Figur 20 dargestellt. Der einzige Unterschied zu der Ausführungsform nach Fig. 18 und Fig. 19 besteht darin, dass das dem Verlegeuntergrund V zugewandte Hakenelement 7 des Paneels 10 an seinem freien äußeren Ende keinen Freiraum 17 zu dem korrespondierenden Hakenelement 6 des verbundenen Paneels 2 aufweist. Stattdessen ist wiederum eine hinterschnittene Verbindung 18 vorgesehen, die ebenso wie das Sperrelement 36 ein Auseinanderbewegen der Hakenverbindung 8 in einer Richtung senkrecht zu der Ebene der verlegten Paneele 2 und 10 verhindert.

Eine andere Konstruktion eines Befestigungssystems 1 sieht gemäß Fig. 21 ein Sperrelement in Form eines Krallstücks 40 vor, das im montierten Zustand zwischen sich hintergreifenden Hakenflächen 41 und 42 der Hakenelemente 6 und 7 angeordnet ist. Das Krallstück 40 weist Krallelemente 40 a auf, die in die Oberfläche der Hakenflächen 41 und 42 greifen und eine vertikale Auseinanderbewegung der Hakenelemente 6 und 7 verhindern. Um Platz für das Krallstück 40 zu schaffen und Zwängungen zwischen den Hakenelementen 6 und 7 zu vermeiden, ist zwischen den sich hintergreifenden Hakenflächen 41 und 42 ein freier Zwischenraum 43 gebildet. In der Darstellung der Fig. 21 ist das Krallstück 40 im montierten Zustand der Hakenverbindung 8 gezeigt. Das Krallstück 40 ist in einer dafür vorgesehenen Ausnehmung 44 des Hakenelements 6 befestigt und schmiegt sich beginnend an der Ausnehmung 44 bis über die Hakenfläche 41 an dem Hakenelement 6 an. Die Ausnehmung 44 für das Krallstück 40 ist an dem Teil des Hakenelements 6 angeordnet, der das korrespondierende Hakenelement 7 hintergreift, wobei die Öffnung der Ausnehmung 44 an einer zum Verlegeuntergrund gewandten Fläche 45 des Hakenelements 6 angeordnet ist. Das Krallstück 40 ist dabei derart umgebogen, dass es in den Zwischenraum 43 hineinragt, den die sich hintergreifenden Hakenflächen 41 und 42 bilden.

Das Krallstück 40 ist vor der Montage L-förmig ausgebildet. Ein erster Schenkel des L-förmigen Krallstücks steckt in der Ausnehmung 44 des Hakenelements 6. Der zweite Schenkel ist mit den Krallelementen versehen und weist vor der Montage etwa senkrecht von der Schmalseite des Paneels 10 weg. Letzterer Schenkel wird während der Montage automatisch in den Zwischenraum 43 der sich hintergreifenden Hakenflächen 41 und 42 hineingebogen.

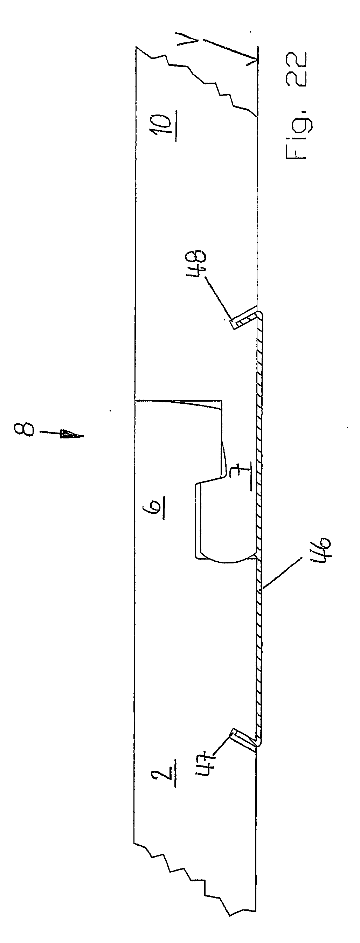

Die in Fig. 22 gezeigte letzte Konstruktion des Befestigungssystems macht von einem Sperrelement in Form einer Klammer 46 Gebrauch. Zu diesem Zweck weist jedes Paneel 2 und 10 auf seiner dem Verlegeuntergrund V zugewandten Unterseite hinterschnittene Bodenausnehmungen 47 und 48 auf, von denen je eine im Bereich jedes Hakenelements 6 bzw. 7 an der Unterseite des Paneels 2 bzw. 10 angeordnet ist. In je einer Bodenausnehmungen 47 und 48 zweier benachbarter Paneele 2 und 10 greift eine Klammer 46 ein. Damit die Klammer 46 ein Auseinanderbewegen der Hakenverbindung 8 in einer Richtung senkrecht zu der Ebene der verlegten Paneele 2 und 20 verhindert, weist jede Bodenausnehmung 47 und 48 eine Hinterschneidung auf. Nach Fig. 22 ist die Hinterschneidung der Bodenausnehmung 47 eines ersten Paneels 2 im zusammengefügten Zustand zweier Paneele entgegengesetzt ausgerichtet zu der Hinterschneidung der Bodenausnehmung 48 eines zweiten Paneels 10. Die Klammer 46 ist U-förmig ausgebildet. Es ist selbstverständlich, dass die Klammer 46 auch ein ebenes seitliches Auseinanderschieben rechtwinklig zu den Hakenelementen 6 und 7 der Schmalseite der Paneele 2 und 10 verriegelt und somit die Funktion der Hakenverbindung 8 unterstützt.

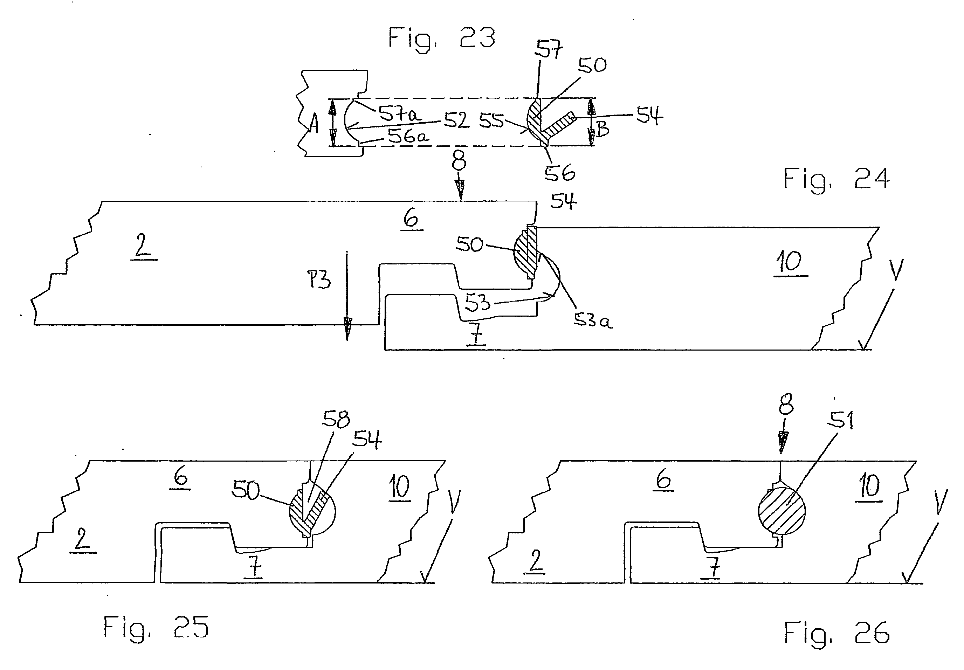

Fig. 23 zeigt ein Sperrelement 50 mit besonderem Querschnitt, das in der Praxis durch das in Fig. 26 gezeigte Sperrelement 51 ersetzt werden kann. Letzteres Sperrelement 51 weist einen einfachen runden Querschnitt auf. Außerdem zeigt Fig. 23 eine leere Sperrnut 52, in der das Sperrelement 51 verliersicher aufnehmbar ist. Die Verliersicherheit gewährleistet während der Handhabung eines Paneels 2 und während der Verhakung der Hakenverbindung 8 gemäß Pfeilrichtung P3, dass das Sperrelement 50 nicht aus der Sperrnut 52 herausfällt. Damit ein Austausch der Sperrelemente 50 und 51 möglich ist, sind die in den Hakenelementen 6 und 7 vorgesehenen Sperrnuten 52 und 53 in besonderer Weise an die Geometrie der unterschiedlichen Sperrelemente 50 und 51 angepasst.

Das Sperrelement 50 ist eine Weiterbildung des in Fig. 17 dargestellten Sperrelements 36. Es weist eine Rastlasche 54 auf, die in Fig. 23 in einem weit abgespreizten entspannten Zustand dargestellt ist. An einem Rücken 55 weist das Sperrelement 50 eine runde Form auf, die sich gemäß Fig. 24 passend in die Sperrnut 52 des Hakenelements 6 einfügt. Das Sperrelement 50 ist mit Halteelementen 56 und 57 versehen, über die es in der Sperrnut 52 des Hakenelements 6 verliersicher festlegbar ist. Die Halteelemente 56 und 57 dienen außerdem dazu ein Verrutschen bzw. eine Verdrehung des Sperrelements 50 in der Sperrnut 52 bzw. in der durch die Sperrnuten 52 und 53 gebildeten Sperrausnehmung 58 zu verhindern. Die Halteelemente 56 und 57 sind in der vorliegenden Ausführungsform als stumpfe Nocken ausgebildet. An der leeren Sperrnut 52 der Fig. 23 ist zu sehen, dass diese an den Rändern ihres halbkreisförmigen Querschnitts Materialausnehmungen 56a und 57a aufweist, die zur Aufnahme der Halteelemente 56 und 57 dienen. Das an der Sperrnut 52 angegebene Maß A ist etwas geringer ausgeführt als das an dem Sperrelement 50 angegebene Maß B. Dies bewirkt die verliersichere Klemmung des Sperrelements 50 in der Sperrnut 52. In einer anderen Ausführungsform sind die Halteelemente des Sperrelements 50 als Widerhaken oder Krallelemente ausgebildet (nicht dargestellt), die in einem Teil der Nutwand der Sperrnut 52 festsetzbar sind, und das Sperrelement 50 verliersicher an dem Hakenelement 6 festhalten. Die Materialausnehmungen in der Sperrnut 52 sind bei dieser Ausführung nicht erforderlich.

Fig. 24 zeigt den Fügevorgang einer Hakenverbindung 8. Ein Paneel 2 wird nämlich gemäß Pfeilrichtung P3 auf den Verlegeuntergrund V herabgeschwenkt, wodurch die Hakenelemente 6 und 7 der Paneele 2 und 10 sich miteinander verhaken. Es ist leicht erkennbar, dass das Sperrelement 50 sicher in der Sperrnut 52 gehalten ist, während die Hakenelemente auf die beschriebene Weise verbunden werden. Sobald das freie Ende der Rastlasche 54 eine obere Kante 53a der Sperrnut 53 passiert hat, federt die Rastlasche 54 selbsttätig in die Sperrnut 53, welche ihr als Rastvertiefung dient und verriegelt die Hakenverbindung.

### Bezugszeichenliste

- 1: Befestigungssystem
- 2: Paneel
- 3: Paneel
- 4: Feder
- 4a: gekrümmter Bereich
- 5: Nut
- 5a: gekrümmte Vertiefung
- 5b: untere Nutwand
- 6: Hakenelement
- 7: Hakenelement
- 8: Hakenverbindung
- 9: Trittschall dämmende Zwischenlage
- 10: Paneel
- 11: Gewicht
- 12: Höhenversatz
- 13: Sperrelement
- 14: Sperrnut
- 15: Sperrnut
- 16: Sperrausnehmung
- 17: Zwischenraum
- 18: hinterschnittene Verbindung
- 19: zurückstehende Fläche
- 20: hervorstehende Fläche
- 21: zurückstehende Fläche
- 22: Sperrelement
- 23: Sperrnut
- 24: Sperrnut
- 25: Sperrausnehmung
- 26: Sperrelement
- 27: Sperrelement
- 28: Sperrelement
- 30: Sperrnut
- 31: Sperrnut
- 32: Sperrnut
- 33: Sperrnut
- 34: Sperrelement
- 34a: Krallelement
- 35: Sperrelement
- 35a: Krallelement
- 36: Sperrelement
- 37: Rastlasche
- 38: Nut
- 38a: hervorstehende Fläche
- 39: Rastvertiefung
- 40: Krallstück
- 40a: Krallelement
- 41: Hakenfläche
- 42: Hakenfläche
- 43: Zwischenraum
- 44: Ausnehmung
- 45: Fläche
- 46: Klammer
- 47: Bodenausnehmung
- 48: Bodenausnehmung
- 50: Sperrelement
- 51: Sperrelement
- 52: Sperrnut
- 53: Sperrnut
- 54: Rastlasche
- 55: Rücken
- 56: Halteelement
- 57: Halteelement
- 58: Sperrausnehmung
- A: Maß
- B: Maß
- P1: Pfeilrichtung
- P2: Pfeilrichtung
- P3: Pfeilrichtung
- V: Verlegeuntergrund

## Patentansprüche

1. Befestigungssystem (1) für viereckige tafelförmige Paneele (2, 3, 10) mit an den Schmalseiten der Paneele (2, 3, 10) angeordneten Halteprofilen, von denen gegenüberliegend angeordnete Halteprofile derart zueinander passen, dass gleichartige Paneele (2, 3, 10) miteinander verbindbar sind, wobei die Halteprofile an gegenüberliegenden Schmalseiten jedes Paneels (2, 3, 10) als erste Halteprofile und an den übrigen Schmalseiten des Paneels (2, 3, 10) als zweite Halteprofile ausgebildet sind, wobei die ersten Halteprofile so ausgebildet sind, dass an einem in erster Reihe liegenden Paneel (2, 3, 10) in zweiter Reihe ein neues Paneel (2) verriegelbar ist, indem das neue Paneel (2) an seinem ersten Halteprofil zunächst in Schrägstellung relativ zu dem liegenden Paneel (3) an das liegende Paneel (3) angefügt und nachfolgend in die Ebene des liegenden Paneels (3) herabgeschwenkt wird, wobei die gegenüberliegend angeordneten zweiten Halteprofile korrespondierende Hakenelemente (6, 7) aufweisen, und wobei mit einem der Hakenelemente (6, 7) des neuen Paneels (2) und einem Hakenelement (6, 7) eines bereits in zweiter Reihe liegenden Paneels (3) durch das Herabschwenken des neuen Paneels (2) eine Hakenverbindung (8) herstellbar ist, wobei jeder Hakenverbindung (8) ein zusätzliches Sperrelement (36, 50) zugeordnet ist, das im verhakten Zustand zweier Paneele (2, 3, 10) ein Lösen der Hakenverbindung (8) in einer Richtung senkrecht zu der Ebene der verlegten Paneele (2, 3, 10) unterbindet, mit der Maßgabe, dass jedes der Hakenelemente der gegenüberliegenden Schmalseiten eines Paneels eine Sperrnut (14, 15, 23, 24, 28, 38, 39, 52, 53) aufweist, die sich in Längsrichtung der Schmalseite erstreckt, wobei die Sperrnuten (52, 53) an solchen Flächen eines Hakenelements (6, 7) vorgesehen sind, die im verlegten Zustand der Paneele (2, 3, 10) etwa senkrecht zu der Ebene ausgerichtet ist, in der die Paneele (2, 3, 10) verlegt sind, wobei die Sperrnuten (14, 15, 23, 24, 28, 38, 39, 52, 53) zweier Paneele (2, 3, 10) im verbunden Zustand der Hakenelemente (6, 7) aneinander grenzen und eine gemeinsame Sperrausnehmung (16, 25, 58) bilden, wobei das Sperrelement (36, 50) im verhakten Zustand zweier Paneele (2, 3, 10) in der Sperrausnehmung (16, 25, 58) angeordnet ist und teilweise in den Querschnitt der Sperrnut des einen Paneels (2, 3, 10) und teilweise in den Querschnitt der Sperrnut des anderen Paneels (2, 3, 10) ragt, insbesondere für Fußbodenpaneele, **dadurch gekennzeichnet, dass** das Sperrelement (36, 50) als selbsttätig einrastendes Sperrelement (36, 50) ausgebildet ist, dass das einrastbare Sperrelement (36, 50) so ausgebildet ist, dass es seitlich in die Sperrnut (52, 53) eines der zu verbindenden Hakenelemente (6, 7) des neuen Paneels (2) und des bereits in zweiter Reihe liegenden Paneels (3) angefügt ist, bevor das neue Paneel (2) in zweiter Reihe herabgeschwenkt wird, wobei die Einrastung des Sperrelements selbsttätig dann geschieht, wenn das neue Paneel (2) herabgeschwenkt wird, wobei die Hakenverbindung (8) durch erfolgte Einrastung des Sperrelements (36, 50) senkrecht zu der Ebene der verlegten Paneele verriegelt ist, dass das Sperrelement (36, 50, 51) so ausgebildet ist, dass eine federnde Rastlasche (37, 54) vorgesehen ist, die im entspannten Zustand von der Schmalseite weit hervorsteht, so dass sie während des Herabschwenkens des ersten Paneels (2) in die Ebene der verlegten Paneele mit dem Hakenelement (7) des zweiten Paneels (10) in Berührung kommt und automatisch soweit zurückklappbar ist, dass die federnde Rastlasche an der Schmalseite nicht mehr über das äußere Ende des Hakenelements (6) des ersten Paneels hinausragt, dass die Sperrnut (39, 53) des Hakenelements der gegenüberliegenden Schmalseite als hinterschnittene Rastvertiefung ausgebildet ist, und dass, wenn die Hakenverbindung nahezu ihre Verriegelungsposition erreicht hat, die federnde Rastlasche (37, 54) selbsttätig in die Rastvertiefung des Hakenelements des benachbarten Paneels hervorfedert.

2. Befestigungssystem nach Anspruch 1, **dadurch gekennzeichnet, dass** das selbsttätig hervorfedernde Sperrelement (36, 50) seitlich an dem ersten Hakenelement (7) der Paneele (2, 3, 10) angefügt ist.

3. Befestigungssystem nach Anspruch 1, **dadurch gekennzeichnet, dass** das selbsttätig einrastende Sperrelement (36, 50, 51) seitlich an dem zweiten Hakenelement (6) der Paneele (2, 3, 10) angefügt ist.

4. Befestigungssystem nach einem der Ansprüche 1 bis 3, **dadurch gekennzeichnet, dass** die mit den Sperrnuten (14, 15, 23, 24, 28, 38, 39, 52, 53) versehenen etwa senkrecht zur Paneelebene ausgerichteten Flächen eines jeden Hakenelements (6, 7) so angeordnet sind, dass sie von der Schmalseite des jeweiligen Paneels (2, 3, 10) weg nach außen weisen.

## Claims

1. Fastening system (1) for rectangular, tabular panels (2, 3, 10) with holding profiles arranged on the small faces of the panels (2, 3, 10), wherein oppositely arranged holding profiles match each other in such a manner that like panels (2, 3, 10) can be connected to each other, wherein the holding profiles on opposite small faces of each panel (2, 3, 10) are constructed as first holding profiles and on the remaining small faces of the panels (2, 30, 10) as second holding profiles, wherein said first holding profiles are constructed in such a manner that to a panel (2, 3, 10) installed in a first row a new panel (2) can be locked in a second row by said new panel (2) being joined at its first holding profile to the installed panel (3) initially at inclination with respect to the installed panel (3) and thereafter being turned down into the plane of the installed panel (3), wherein said oppositely arranged second holding profiles have complementary hook elements (6, 7), and wherein a hook connection (8) can be made with one of the hook elements (6, 7) of the new panel (2) and a hook element (6, 7) of an already installed panel (3) in the second row by turning said new panel (2) down, wherein each hook connection (8) includes an associated additional locking element (36, 50), which in the hooked state of two panels (2, 3, 10) prevents the hook connection (8) from becoming unhooked in a direction perpendicular to the plane of the installed panels (2, 3, 10), provided that each of the hook elements of the opposing small faces of a panel includes a locking groove (14, 15, 23, 24, 28, 38, 39, 52, 53) which extends in the longitudinal direction of the small face, wherein the locking grooves (52, 53) are provided on those surfaces of a hook element (6, 7) which in the installed state of the panels (2, 3, 10) are oriented approximately vertically to the plane in which the panels (2, 3, 10) are installed, wherein the locking grooves (14, 15, 23, 24, 28, 38, 39, 52, 53) of two panels (2, 3, 10) in the connected state of the hook elements (6, 7) adjoin each other and form a common locking recess (16, 25, 58), wherein the locking element (36, 50) in the hooked state of two panels (2, 3, 10) is disposed in the locking recess (16, 25, 58) and partly protrudes into the cross section of the locking groove of said one panel (2, 3, 10) and partly into the cross section of the locking groove of said other panel (2, 3, 10), said fastening system being particularly intended for floor panels, **characterized in that** the locking element (36, 50) is constructed as an automatically locking element (36, 50), that the lockable locking element (36, 50) is constructed in such a manner that it is laterally joined to the locking groove (52, 53) of the hook elements (6, 7) to be connected of the new panel (2) and of the panel (3) already installed in a second row before the new panel (2) in the second row is turned down, wherein locking of the locking element takes place automatically as soon as the new panel (2) is turned down, wherein the hook connection (8) is locked by the completion of the locking of the locking element (36, 50) vertically to the plane of the installed panels, that the locking element (36, 50, 51) is constructed in such a manner that an elastic snap tab (37, 54) is provided, which in the relaxed state protrudes from the small face to such an extent that during the action of turning the first panel (2) down into the plane of the installed panels it comes into contact with the hook element (7) of the second panel (10) and can be automatically folded back to such an extent that the elastic snap tab on the small face no longer protrudes over the outer end of the hook element (6) of the first panel, that the locking groove (39, 53) of the hook element of the opposite small face is constructed as an undercut locking recess, and that, when the hook connection has almost reached its locking position, the elastic snap tab (37, 54) springs out automatically into the locking recess of the hook element of the adjacent panel.

2. Fastening system according to claim 1, **charac** - **terized in** that the locking element (36, 50) that springs out automatically is laterally joined to the first hook element (7) of the panels (2, 3, 10).

3. Fastening system according to claim 1, c h a r a c - **terized in** that the automatically locking element (36, 50, 51) is laterally joined to the second hook element (7) of the panels (2, 3, 10).

4. Fastening system according to one of the claims 1 to 3, **characterized in that** the surfaces of each hook element (6, 7) which are provided with the locking grooves (14, 15, 23, 24, 28, 38, 39, 52, 53) and are oriented approximately vertically to the panel plane are arranged in a manner such as to point away and outwards from the small face of the respective panel (2, 3, 10).

## Revendications

1. Système de fixation pour panneaux carrés tabulaires (2, 3, 10) avec des profilés de maintien disposés sur les côtés étroits des panneaux (2, 3, 10), des profilés de maintien opposés les uns aux autres s'adaptant les uns aux autres de manière que des panneaux de même type (2, 3, 10) puissent être reliés les uns aux autres, les profilés de maintien aux côtés étroits opposés du chaque panneau (2, 3, 10) étant réalisés sous la forme de premiers profilés de maintien et les profilés de maintien aux autres côtés étroits du panneau (2, 3, 10) étant réalisés sous la forme de deuxièmes profilés de maintien, les premiers profilés de maintien étant réalisés de manière qu'un nouveau panneau (2) au deuxième rang peut être verrouillé sur un panneau (2, 3, 10) posé au premier rang en ce que premièrement le nouveau panneau (2) est joint, par le côté de son premier profilé de maintien, obliquement au panneau posé (3) et après est pivoté en bas vers le plan du panneau posé (3), les deuxièmes profilés de maintien opposés comprenant des éléments formant crochet (6, 7) complémentaires, une liaison à crochet (8) pouvant être produite par le pivotement en bas du nouveau panneau (2), chacune des liaisons à crochet (8) comportant un élément d'arrêt additionnel associé (36,50) qui à l'état accroché de deux panneaux (2, 3, 10) empêche la liaison à crochet (8) d'être ouvert en direction perpendiculaire au plan des panneaux posés (2, 3, 10), étant donné que chacun des éléments formant crochet des côtés étroits opposés d'un panneau comporte une rainure d'arrêt (14, 15, 23, 24, 28, 38, 39, 52, 53) qui s'étend en direction longitudinale du côté étroit, les rainures d'arrêt (52, 53) étant prévues sur telles surfaces d'un élément formant crochet (6, 7) qui, à l'état posé des panneaux (2, 3, 10), sont orientées sensiblement perpendiculairement au plan en lequel sont posés les panneaux (2, 3, 10), les rainures d'arrêt (14, 15, 23, 24, 28, 38, 39, 52, 53) de deux panneaux (2, 3, 10), à l'état relié des éléments formant crochet (6, 7) se côtoyant et formant un creux d'arrêt commun (16, 25, 58), l'élément d'arrêt (36, 50), à l'état accroché de deux panneaux (2, 3, 10), étant disposé dans ledit creux d'arrêt (16, 25, 58) et faisant saillie en partie dans la section transversale de la rainure d'arrêt de l'un des panneaux (2, 3, 10) et en partie dans la section transversale de la rainure d'arrêt de l'autre des panneaux (2, 3, 10), le système de fixation étant destiné notamment aux panneaux de plancher, **charactérisé en** ce que l'élément d'arrêt (36, 50) est réalisé sous la forme d'un élément d'arrêt auto-encliquetant (36, 50), que l'élément d'arrêt encliquetable (36, 50) est réalisé de telle manière qu'il est joint latéralement à l'intérieur de la rainure d'arrêt (52, 53) de l'un des éléments formant crochet à relier (6, 7) du nouveau panneau (2) et du panneau déjà posé au deuxième rang avant que le nouveau panneau (2) au deuxième rang soit pivoté en bas, l'encliquetage de l'élément d'arrêt se faisant automatiquement lors du pivotement en bas du nouveau panneau (2), la liaison à crochet (8) étant verrouillée par l'encliquetage faite de l'élément d'arrêt (36, 50) perpendiculaire au plan des panneaux posés, que l'élément d'arrêt (36, 50, 51) est réalisé de sorte qu'est prévu une patte élastique de verrouillage (37, 54) qui à l'état relaxé est largement saillant du côté étroit de sorte que lors du pivotement du premier panneau (2) vers le plan des panneaux posés, ladite patte va entrer en contact avec l'élément à crochet (7) du deuxième panneau (10) et est rabattable automatiquement jusque la patte élastique de verrouillage sur le côté étroit n'est saillant plus au-delà de l'extrémité extérieure de l'élément formant crochet (6) du premier panneau, que la rainure d'arrêt (39, 53) de l'élément formant crochet du côté étroit opposé est réalisée sous la forme d'une cavité de verrouillage à contre-dépouille, et que, lorsque la liaison à crochet est presque arrivée à sa position de verrouillage, la patte élastique de verrouillage (37, 54) se débande automatiquement dans la cavité de verrouillage de l'élément formant crochet du panneau adjacent.

2. Système de fixation selon la revendication 1, **charactérisé en ce que** l'élément d'arrêt (36, 50) à débande automatique est joint latéralement au premier élément formant crochet (7) des panneaux (2, 3, 10).

3. Système de fixation selon la revendication 1, **charactérisé en ce** que l'élément d'arrêt (36, 50, 51) à encliquetage automatique est joint latéralement au deuxième élément formant crochet (6) des panneaux (2, 3, 10).

4. Système de fixation selon l'une des revendications 1 à 3, **charactérisé en ce que** les surfaces de chacun des éléments formant crochet (6, 7) munies des rainures d'arrêt (14, 15, 23, 24, 28, 38, 39, 52, 53) et orientées sensiblement perpendiculairement au plan de panneau sont arrangées de manière qu'ils montrent (6, 7) vers l'extérieur du côté étroit du panneau respectif (2, 3, 10).
